(19) Europäisches Patentamt

European Patent Office

Office européen des brevets

(11) **EP 0 694 768 B1**

(12) **EUROPEAN PATENT SPECIFICATION**

(45) Date of publication and mention
of the grant of the patent:
**20.02.2002 Bulletin 2002/08**

(51) Int Cl.[7]: **G01G 19/56**, G01G 7/06

(21) Application number: **95304587.9**

(22) Date of filing: **29.06.1995**

(54) **Weight sensing device for a microwave oven**

Wägevorrichtung für Mikrowellenöfen

Dispositif de détection de poids pour un four à micro-ondes

(84) Designated Contracting States:
**DE FR GB NL**

(30) Priority: **25.07.1994 KR 9417988**

(43) Date of publication of application:
**31.01.1996 Bulletin 1996/05**

(73) Proprietor: **DAEWOO ELECTRONICS CO., LTD
Seoul (KR)**

(72) Inventor: **Lee, Jong Cheol
Namdong-Ku, Incheon (KR)**

(74) Representative: **Needle, Jacqueline
W.H. BECK, GREENER & CO 7 Stone Buildings
Lincoln's Inn
London WC2A 3SZ (GB)**

(56) References cited:
**EP-A- 0 299 395          EP-A- 0 302 396
DE-A- 4 128 557          GB-A- 2 166 551
US-A- 5 349 138**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a weight sensing device for a microwave oven, for example, to a device for sensing food weight in a microwave oven.

A microwave oven is an appliance for cooking foods using microwaves. The microwaves are radiated from a magnetron to expose the food in a cooking chamber for cooking. The intensity and exposure time of the microwaves may be adjusted in dependence upon the weight of the food to be cooked. To achieve this automatically, methods for sensing food weight using piezoelectric elements and the capacitance between electrode plates have been utilised. EP-A-0299395 shows an example of an automatic weight detecting device for a microwave oven.

Where a capacitance method is used, the capacitance is varied according to the food weight. The frequency or intensity of a high frequency is adjusted according to the variation of the capacitance, and a microcomputer adjusts the intensity and the exposure time of the microwaves to cook the weighed food appropriately by way of microwave exposure. Therefore, the sensing of the food weight is the most important thing in order to cook the food appropriately.

U.S. Patent No. 5,349,138 discloses a food weight sensing device in which food to be cooked is placed on a tray of the microwave oven thereby lowering a supporting bracket together with a movable electrode plate. Thus, the distance between the movable electrode plate and a fixed electrode plate is reduced to vary the capacitance therebetween. A microcomputer reads the food weight according to the capacitance variation to thereby sense the food weight.

EP-A-0302396 describes a weight sensing device for a microwave oven comprising two electrode plates individually supported to be spaced one above the other by a fixed distance when no weight is applied, the upper one of said two electrode plates having an elastically supported area arranged to be depressed in dependence upon an applied weight to change the distance between two electrode plates and thereby provide a measure of the applied weight.

However, repeated use of known devices for sensing the food weight may induce variations in the initially set distance between the two electrode plates and a problem of difficult detection of the accurate food weight will then occur. Moreover, where the fixed electrode plate is carried by a printed circuit board (PCB), the PCB might be destroyed after repeated deformation.

According to the present invention a weight sensing device as defined above is characterised in that one of the two electrode plates is slidable in its own plane to enable relative horizontal movement of the two electrode plates whereby an initial weight reading can be set by varying the overlapping area of the two electrode plates.

For example, the initial weight may be reset by sliding the lower electrode plate to adjust its overlapping area with the upper electrode plate after repeated use of the microwave oven so that the device senses the food weight according to the varied vertical distance between the upper and lower electrode plates.

An embodiment of a device of the invention is able to set the initial weight by varying the overlapping area of the two electrode plates. This enables the initial distance between the two electrode plates to be kept constant and therefore enables the food weight to be accurately sensed even after repeated use.

In an embodiment, the lower one of said electrode plates is printed on a printed circuit board, and the printed circuit board is mounted to be slidable in its own plane whereby the overlapping area of the two electrode plates is variable.

Said elastically supported area of said upper electrode plate may be a substantially rigid area fixed to said plate by elastic means. In an embodiment, said elastically supported area of said upper electrode plate is an area within said upper electrode plate which is separated from said upper electrode plate along three sides. In this latter case, the electrode plate and the elastically supported area thereof are preferably of elastic material, for example, manufactured as a plate spring.

Preferably, a bracket for supporting said two electrode plates is provided, said bracket having first surface means for supporting said upper electrode plate and second surface means for supporting said lower electrode plate, wherein said first surface means are spaced above said second surface means.

In an embodiment, said bracket is provided with two side walls and a bottom, the front side and the rear side of the bracket being open, and the bottom forming said second surface means supporting the lower electrode plate.

Preferably, said weight sensing device further comprises a motor assembly mounted on said bracket, the motor assembly having a motor axis for supporting a food tray, and wherein the upper electrode plate is fixed to said bracket below said motor assembly to be in contact with said motor axis.

In an embodiment of the invention, the bracket is provided with first extending pieces extended from upper and rear portions of both side walls of the bracket, and the motor assembly is mounted on the first extending pieces. The bracket is provided with second extending pieces extended from front and lower portions of the side walls, the second extending pieces are vertically higher than the bottom of the bracket, and the upper electrode plate is fixed to the second extending pieces. The bracket is provided with guides bent at a rear portion of the bottom, for guiding the printed circuit board. The bracket is further provided with shoulders extended from upper portions of the side walls of the bracket and a housing of a microwave body is combined with the shoulders.

The upper electrode plate is provided with a body and the elastic supporting piece formed in a region from a centre portion to a rear portion of the body. For example, the elastic supporting piece is separated from both sides and a front of said body and is elastically supported by the rear portion of said body, and a concavity is formed at the front portion of said elastic supporting piece to introduce the end portion of said motor axis. The printed circuit board is provided with longitudinal holes at both sides from a centre thereof so that the printed circuit board may slide between the upper electrode plate and the bottom of the bracket forwardly and backwardly. The overlapping area is adjusted by sliding the printed circuit board at a state that screws are inserted in the longitudinal holes.

In a device for sensing food weight in the microwave oven of the present invention, if the PCB slides back and forth centring around a bolt inserted in the longitudinal hole of the PCB, the overlapping area between the upper and lower electrode plates changes. Accordingly, the capacitance changes. At this time, the overlapping area is adjusted to the initial weight of zero and the PCB is fixed to the bracket by tightening up the bolt passing through the longitudinal hole. Thus, the initial weight is set.

After setting the initial weight, when food is placed on a tray of the microwave, the elastic supporting piece is lowered by receiving the food weight via the motor axis of the motor assembly which supports the tray. Accordingly, the distance between the upper and lower electrode plates is narrowed to increase the capacitance of a capacitor comprised of the fixed electrode plate and the movable electrode plate. Using a frequency variation due to the increase of the capacitance, a microcomputer senses the food weight.

By using an embodiment of a device for sensing food weight of the invention in a microwave oven, the initial weight of the food can be set using the overlapping area of the upper electrode plate with the lower electrode plate. Further, since the initial weight is not changed, the weight of the food can be accurately measured to cook appropriately.

In addition, the PCB is not deformed nor destroyed after repeated usage of the device for sensing the food weight and the food weight is accurately delivered to the upper electrode plate.

Preferably, said bracket is formed in one body.

In an embodiment, said upper electrode plate is formed so as to have a plate spring shape.

The end portion of said motor axis may be inserted into a concavity of said elastic supporting piece in said upper electrode plate.

Embodiments of the present invention will hereinafter be described, by way of example, with reference to the accompanying drawings, in which:

    Figure 1 shows a cross-sectional view of a substantially conventional device for sensing food weight in a microwave oven;
    Figure 2 shows an exploded perspective view of a device for a microwave oven for sensing food weight according to an embodiment of the present invention;
    Figure 3 is a perspective view of the device of Figure 2 showing a PCB inserted between a movable electrode plate and the bottom of a bracket for setting an initial weight; and
    Figure 4 is a cross-sectional view showing the device of Figure 2 in an assembled state with a housing of a microwave oven.

In the drawings, the same reference numerals are used for the same or similar components.

A conventional capacitance-type weight sensing device is provided with a fixed electrode plate which is printed in a printed circuit board (PCB) including a control circuit having a resistance-capacitor (RC) oscillating circuit. A movable electrode plate, for example, fabricated by use of a plate spring, has a position arranged to change in dependence upon the food weight. The distance variation between the two electrode plates induces a variation in the capacitance between the two electrode plates. A frequency of the high frequency is varied by the capacitance variation between the fixed electrode plate and the movable electrode plate. The microcomputer senses the frequency of the changed high frequency and reads out the food weight corresponding to the sensed frequency from a previously prepared look-up table. Then the microcomputer controls the microwave intensity and the cooking time in dependence upon the food weight. The food weight in such a microwave oven is detected utilizing the following equation (1) :

$$C \propto \varepsilon A/d \qquad (1)$$

    wherein, C represents the capacitance, $\varepsilon$ represents a dielectric constant of air, A represents the overlapping area of the electrode plates and d represents the distance between the electrode plates.

As shown in equation (1), when the overlapping area A is constant, the capacitance C is inversely proportional to the distance d between the fixed electrode plate and the movable electrode plate. Similarly, when the distance d is constant, the capacitance C is proportional to the overlapping area A between the fixed electrode plate and the movable electrode plate. That is, when the distance d becomes shorter and the overlapping area A becomes wider, the capacitance C increases.

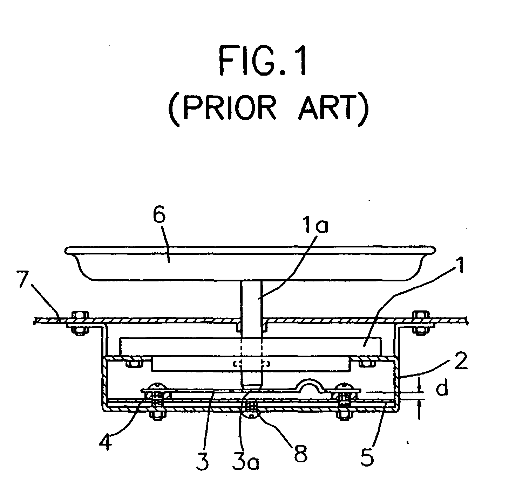

Figure 1 shows a cross-sectional view of a substantially conventional device for sensing food weight in a microwave oven, the device utilizing the distance variation between a fixed electrode plate and a movable electrode plate.

As is illustrated in Figure 1, the device for sensing the food weight in the microwave oven includes a bracket 2 assembled with a motor 1, having a motor axis 1a. The bracket 2 is provided to transfer the weight of food which is placed on a tray 6. A movable electrode plate 3 provided with an elastic supporting piece 3a is positioned under the motor 1 and is arranged to receive the food weight from the motor axis 1a. A fixed electrode plate 5 is spaced beneath the movable electrode plate 3. To maintain a constant distance d between the fixed and movable electrode plates, the centre portion of the fixed electrode plate 5 is supported by a screw 8 so that it is a predetermined distance from the bottom of the bracket 2, and spacers 4 maintain the distance d between the movable electrode plate 3 and the fixed electrode plate 5.

The device shown in Figure 1 for sensing food weight operates as follows.

Firstly, the distance d between the fixed electrode plate 5 and the movable electrode plate 3 is adjusted by use of the screw 8 to set the initial weight. The initial weight corresponds to the weight of an empty tray without food, i.e., to that when the food weight is zero.

After setting of the initial weight, the elastic supporting piece 3a is bent due to food weight on the tray 6 and this changes the distance d between the movable electrode plate 3 and the fixed electrode plate 5. Thus, the capacitance C between the two electrode plates 3 and 5 changes (see equation (1) above). The frequency of the high frequency is thus changed by the change in the capacitance C. A microcomputer (not shown) senses the change in frequency and is arranged to read the corresponding food weight from a look-up table provided. The microcomputer causes the radiation of microwaves with an appropriate intensity for an appropriate time suitable for cooking the food whose weight has been determined.

However, the food weight which is the factor for bending the elastic supporting piece 3a acts as a force to pressurize the PCB and a repulsive force opposed to this force is generated at the centre portion of the PCB which is supported by the screw 8. Due to the forces applied in this manner, the PCB is deformed into a shape having a convex centre portion. Repeated generation of the PCB deformation results in a variation of the initially set distance d between the electrode plates 3 and 5. That is, the initial weight when no food is placed on the tray 6 deviates from zero.

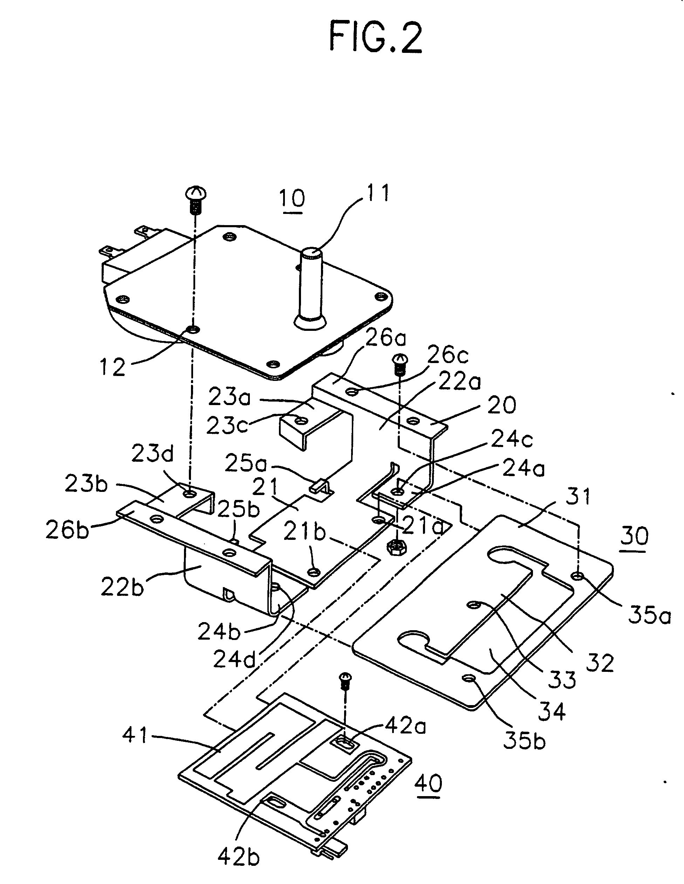

Figure 2 shows an exploded perspective view of a device according to an embodiment for sensing food weight. The device shown in Figure 2 is for use in a microwave oven and includes a bracket 20 having two side walls 22a and 22b and a bottom 21. The front and rear sides of bracket 20 are open. A PCB 40 is mounted on the bottom 21 of the bracket 20, and a movable electrode plate 30 is fixed to second extending pieces 24a and 24b which are extended from the side walls 22a and 22b of the bracket 20.

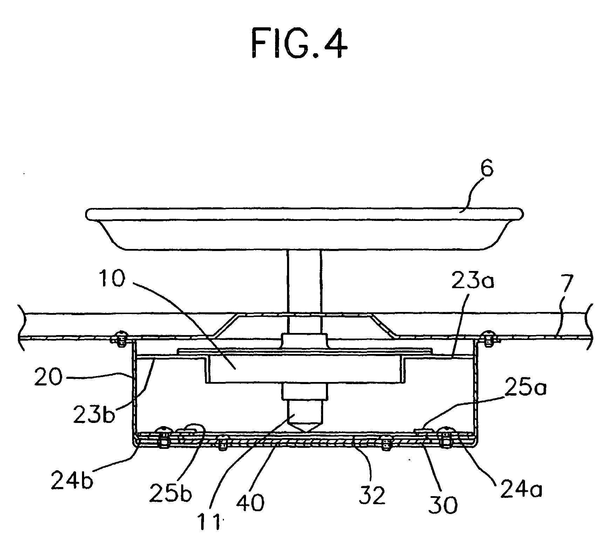

The bracket 20 is integrally formed by bending the side walls 22a and 22b of the bracket 20 from the bottom 21. Shoulders 26a and 26b are bent and extended from the upper portion of the side walls 22a and 22b of the bracket 20. A plurality of first through holes 26c is formed in the shoulders 26a and 26b. The bracket 20 is combined with a housing 7 of a microwave oven body (see Figure 4) by means of bolts extending through the first holes 26c.

In addition, the bracket 20 is provided with first extending pieces 23a and 23b on which a motor assembly 10 is mounted. First extending pieces 23a and 23b are bent and extended from the rear and upper portion of the side walls 22a and 22b of the bracket 20. The motor assembly 10 is mounted on the first extending pieces 23a and 23b by means of bolts which extend through a sixth through hole 12 and second through holes 23c and 23d.

The second extending pieces 24a and 24b of the bracket 20 are bent and extended from the front and lower portion of the side walls 22a and 22b of the bracket 20. The second extending pieces 24a and 24b are separated from the bottom 21 of the bracket 20 and are vertically higher than the bottom 21. Third through holes 24c and 24d are formed in the second extending pieces 24a and 24b.

The movable electrode plate 30 is provided with a body 31 and an elastic supporting piece 32 which is formed in a region between centre and rear portions of the body 31. A space 34 is formed between the front end of the elastic supporting piece 32 and the front end of the body 31. The elastic supporting piece 32 is separated from both sides of the body 31 and from the front side of body 31. The elastic supporting piece 32 is elastically supported by the rear portion of the body 31.

A concavity 33 is formed at the front centre portion of the elastic supporting piece 32. An end portion of a motor axis 11 of the motor assembly 10 is inserted into the concavity 33 of the elastic supporting piece 32 and the food weight is transferred to the elastic supporting piece 32 by way of the motor axis 11 without sliding. Fifth through holes 35a and 35b are formed in both sides of the body 31 of the movable electrode plate 30. The movable electrode plate 30 is fixed to the second extending pieces 24a and 24b of the bracket 20 by bolts extending through the fifth through holes 35a and 35b and through the third through holes 24c and 24d of the second extending pieces 24a and 24b by means of bolts. Preferably, the movable electrode plate 30 is manufactured as a plate spring.

The bracket 20 is provided with a pair of guides 25a and 25b which guide the PCB 40. Each guide 25a, 25b of the pair is bent and positioned at the rear portion of the bottom 21. Fourth through holes 21a and 21b by which the PCB 40 is fixed are formed in the front portion of the bottom 21.

The PCB 40 is provided with a fixed electrode plate 41, which is printed at the rear portion thereof, and with longitudinal holes or slots 42a and 42b which are located at both sides from the centre portion thereof. The PCB 40 is fixed to the fourth through holes 21a and 21b in the bottom 21 of the bracket 20. The fixed electrode plate 41 and the movable electrode plate 30 together form a capacitor.

The device for sensing food weight in a microwave illustrated in Figure 2 is assembled and the initial weight is set as described below.

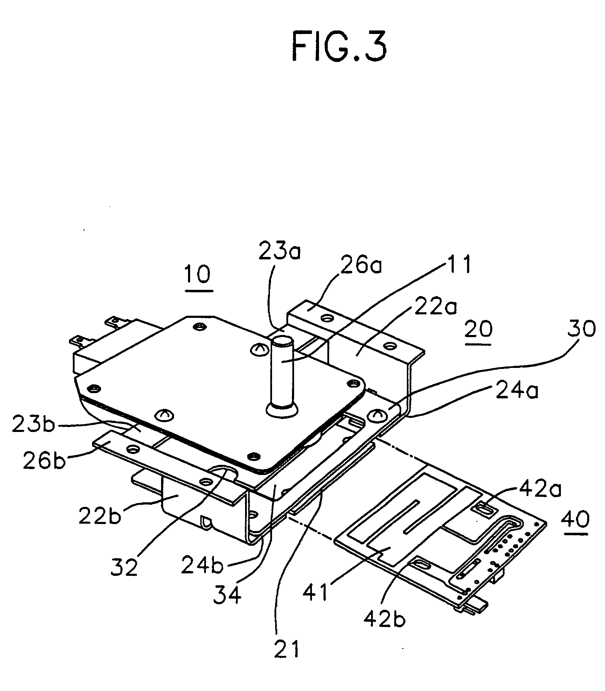

Figure 3 is a schematic view for explaining the assembling process and the setting of the initial weight. As is indicated, the motor assembly 10 is first mounted on the first extending pieces 23a and 23b of bracket 20. Then, the movable electrode plate 30 is fixed to the second extending pieces 21a and 21b of the bracket 20 by means of bolts. At this stage, the PCB 40 is guided by the pair of guides 25a and 25b of the bracket 20 and is slidably inserted into the space formed between the movable electrode plate 30 and the bottom 21 of the bracket 20. When the PCB 40 has been slidably inserted into the space between the movable electrode plate 30 and the bottom 21 of bracket 20 it is secured by bolts inserted into the longitudinal holes 42a and 42b therein and into the fourth through holes 21a and 21b in the bracket 20.

It will be appreciated that the length of the longitudinal holes 42a and 42b can enable the PCB 40 to be slid back and forth relative to the bolts inserted therein. This changes the overlapping area A between the PCB 40 and the movable electrode plate 30. When the overlapping area A is changed in this way, the capacitance C of the capacitor is also changed as shown by equation (1) given above. Therefore, after adjusting the overlapping area A so that the initial weight is zero, the bolts inserted into the longitudinal holes 42a and 42b are tightened to fix the PCB 40 to the bracket 20. Now the initial weight setting is completed. After setting the initial weight, the device is coupled to the housing 7 of a microwave oven body using the shoulders 26a and 26b of the bracket 20 as is shown in Figure 4.

Figure 4 is a cross-sectional view showing the combined state of the housing 7 of a microwave body with the device of Figures 2 and 3. As is shown in Figure 4, when food (not shown) is placed on the tray 6, the elastic supporting piece 32 is depressed by the motor axis 11 of the motor assembly 10 which supports the tray 6. As the elastic supporting piece 32 is lowered, the distance between the fixed electrode plate 41 and the movable electrode plate 30 is narrowed and the capacitance C between the two electrode plates 30 and 41 is increased as can be seen from equation (1). The increased capacitance C changes the frequency of the high frequency and the microcomputer (not shown) senses this change to read the food weight from the previously prepared look-up table. The food cooking is controlled by the microcomputer.

Further, when the distance between the fixed electrode plate 41 and the movable electrode plate 30 is changed to alter the capacitance of the capacitor consisting of the fixed electrode plate 41 and the movable electrode plate 30 after repeated use of the microwave oven, the initial weight deviates from zero. At this time, the initial weight needs to be reset by changing the overlapping area of the fixed electrode plate 41 and the movable electrode plate 30. In such a case, the initial weight of the device for sensing the food weight in a microwave oven can be easily reset by slightly sliding backwards or forwards the PCB 40 which is slidably fixed to the bracket 20. Thus, resetting of the initial weight may be easily performed.

The initial weight of the food can be set by adjustment of the overlapping area of the fixed electrode plate relative to the movable electrode plate. Since the fixed electrode plate and the movable electrode plate are spaced and fixed, the initial distance between the two electrodes is constant, and the initial weight is not changed.

In addition, in a device of the invention, deformation or destruction of the PCB after repeated use can be prevented. Further, since the food weight is accurately delivered to the movable electrode plate, the food weight can be accurately sensed.

Accordingly, a device of the invention enables appropriate cooking to be accomplished through accurate sensing of the food weight.

The present invention has been described above with reference to the embodiment illustrated. However, it will be appreciated that the invention is not limited to that embodiment, and that various changes and modifications can be made without departing from the scope of the invention as defined in the appended claims.

**Claims**

1. A weight sensing device for a microwave oven comprising two electrode plates (30,41) individually supported to be spaced one above the other by a fixed distance when no weight is applied, the upper one (30) of said two electrode plates having an elastically supported area (32) arranged to be depressed in dependence upon an applied weight to change the distance between the two electrode plates (30, 41) and thereby provide a measure of the applied weight, **characterised in that** one (41) of the two electrode plates (30, 41) is slidable in its own plane to enable relative horizontal movement of the two electrode plates (30, 41) whereby an initial weight reading can be set by varying the overlapping area of the two electrode plates.

2. A weight sensing device as claimed in Claim 1, wherein the lower one (41) of said electrode plates is printed on a printed circuit board (40), and wherein the printed circuit board (40) is mounted to be slidable in its own plane whereby the overlapping area of the two electrode plates is variable.

3. A weight sensing device as claimed in Claim 1 or Claim 2, wherein said elastically supported area (32) of said upper electrode plate (30) is an area within said upper electrode plate which is separated from said upper electrode plate along three sides.

4. A weight sensing device as claimed in any preceding claim, further comprising a bracket (20) for supporting said two electrode plates (30, 41), said bracket (20) having first surface means (24a, 24b) for supporting said upper electrode plate (30) and second surface means (21) for supporting said lower electrode plate (41), wherein said first surface means (24a, 24b) are spaced above said second surface means (21).

5. Weight sensing device as claimed in Claim 4, wherein said bracket (20) is provided with two side walls (22a, 22b) and a bottom (21), the front side and the rear side of the bracket being open, and the bottom (21) forming said second surface means supporting the lower electrode plate (41).

6. A weight sensing device as claimed in Claim 4 or Claim 5, further comprising a motor assembly (10) mounted on said bracket (20), the motor assembly (10) having a motor axis (11) for supporting a food tray, and wherein the upper electrode plate (30) is fixed to said bracket (20) below said motor assembly to be in contact with said motor axis (11).

7. A weight sensing device as claimed in Claim 6, wherein said bracket (20) is provided with first extending pieces (23a, 23b) extended from upper and rear portions of both side walls (22a, 22b) of said bracket, and said motor assembly (10) is mounted on said first extending pieces (23a, 23b).

8. A weight sensing device as claimed in any of Claims 4 to 7, wherein said bracket (20) is provided with second extending pieces (24a, 24b) extended from front and lower portions of its side walls (22a, 22b), said second extending pieces (24a, 24b) being vertically higher than the bottom (21) of said bracket, and said second extending pieces forming said first surface means supporting said upper electrode plate (30).

9. A weight sensing device as claimed in any of Claims 4 to 8, wherein said bracket (20) is provided with guides (25a, 25b) bent at a rear portion of its bottom (21) for guiding the lower electrode plate (41).

10. A weight sensing device as claimed in any of Claims 4 to 9, wherein said bracket (20) is provided with shoulders (26a, 26b) extended from upper portions of its side walls (22a, 22b) and a housing (7) of a microwave body is combined with said shoulders.

## Patentansprüche

1. Gewichtssensierungsvorrichtung für einen Mikrowellenofen, umfassend zwei Elektrodenplatten (30, 41), die einzeln so abgestützt sind, dass sie in einem festen Abstand übereinander angeordnet sind, wenn kein Gewicht aufgelegt wird, wobei die obere (30) der beiden Elektrodenplatten einen elastisch gehaltenen Bereich (32) hat, der so angeordnet ist, dass er in Abhängigkeit eines aufgelegten Gewichts niedergedrückt wird, um den Abstand zwischen den beiden Elektrodenplatten (30, 41) zu ändern und dadurch ein Maß des aufgelegten Gewichts bereitzustellen, **dadurch gekennzeichnet, dass** eine (41) der beiden Elektrodenplatten (30, 41) gleitbar in ihrer eigenen Ebene ist, um eine horizontale Relativbewegung der beiden Elektrodenplatten (30, 41) zu ermöglichen, wodurch eine anfängliche Gewichtskorrektur durch Ändern des überlappenden Bereichs der beiden Elektrodenplatten eingestellt werden kann.

2. Gewichtssensierungsvorrichtung nach Anspruch 1, wobei die untere (41) der Elektrodenplatten auf eine Leiterplatte (40) gedruckt ist und wobei die Leiterplatte (40) so befestigt ist, dass sie in ihrer eigenen Ebene gleitbar ist, wodurch der überlappende Bereich der beiden Elektrodenplatten variabel ist.

3. Gewichtssensierungsvorrichtung nach Anspruch 1 oder 2, wobei der elastisch gehaltene Bereich (32) der oberen Elektrodenplatte (30) ein Bercich innerhalb der oberen Elektrodenplatte ist, der von der oberen Elektrodenplatte entlang dreier Seiten getrennt ist.

4. Gewichtssensierungsvorrichtung nach einem der vorhergehenden Ansprüche, die weiterhin einen Träger (20) zum Tragen der beiden Elektrodenplatten (30, 41) umfasst, wobei der Träger (20) eine erste Oberflächeneinrichtung (24a, 24b) zum Tragen der oberen Elektrodenplatte (30) und eine zweite Oberflächeneinrichtung (21) zum Tragen der unteren Elektrodenplatte (41) aufweist, wobei die erste Oberflächeneinrichtung (24a, 24b) oberhalb der zweiten Oberflächeneinrichtung (21) angeordnet ist.

5. Gewichtssensierungsvorrichtung nach Anspruch 4, wobei der Träger (20) mit zwei Seitenwänden (22a, 22b) und einem Boden (21) versehen ist, wobei die Vorderseite und die Rückseite des Trägers offen sind und der Boden (21) die zweite Oberflächeneinrichtung, welche die untere Elektrodenplatte (41) trägt, bildet.

6. Gewichtssensierungsvorrichtung nach Anspruch 4 oder 5, die weiterhin einen an dem Träger (20) befestigten Motoraufbau (10) umfasst, wobei der Motoraufbau (10) eine Motorachse (11) zum Tragen eines Nahrungstabletts hat, und wobei die obere Elektrodenplatte (30) an dem Träger (20) unterhalb des Motoraufbaus so befestigt ist, dass sie in Kontakt mit der Motorachse (11) ist.

7. Gewichtssensierungsvorrichtung nach Anspruch 6, wobei der Träger (20) mit ersten Erstreckungsteilen (23a, 23b) versehen ist, die sich von den oberen und rückwärtigen Abschnitten der beiden Seitenwände (22a, 22b) des Trägers erstrecken, und der Motoraufbau (10) an den ersten Erstreckungsteilen (23a, 23b) befestigt ist.

8. Gewichtssensierungsvorrichtung nach einem der Ansprüche 4 bis 7, wobei der Träger (20) mit zweiten Erstreckungsteilen (24a, 24b) versehen ist, die sich von den vorderen und unteren Abschnitten seiner Seitenwände (22a, 22b) erstrecken, wobei die zweiten Erstreckungsteile (24a, 24b) vertikal höher als der Boden (21) des Trägers sind, und die zweiten Erstreckungsteile die erste Oberflächeneinrichtung, welche die obere Elektrodenplatte (30) trägt, bilden.

9. Gewichtssensierungsvorrichtung nach einem der Ansprüche 4 bis 8, wobei der Träger (20) mit Führungen (25a, 25b) versehen ist, die an einem rückseitigen Abschnitt seines Bodens (21) zum Führen der unteren Elektrodenplatte (41) gebogen ist.

10. Gewichtssensierungsvorrichtung nach einem der Ansprüche 4 bis 9, wobei der Träger (20) mit Schultern (26a, 26b) versehen ist, die sich von den oberen Abschnitten seiner Seitenwände (22a, 22b) erstrecken, und ein Gehäuse (7) eines Mikrowellenkörpers mit den Schultern verbunden wird.

**Revendications**

1. Un dispositif de détection de poids pour un four à micro-onde comprenant deux plaques formant électrode (30, 41) supportées individuellement, pour être espacées l'une au-dessus de l'autre, d'une distance fixe lorsque aucun poids n'est appliqué, la plaque supérieure (30) desdites deux plaques formant électrode ayant une surface (32) supportée élastiquement, agencée pour être enfoncée selon l'application d'un poids, en changeant la distance qu'il y a entre les deux plaques formant électrode (30, 41), et de manière à fournir une mesure de la valeur du poids appliquée, **caractérisé en ce qu'**une plaque (41) des deux plaques formant électrode (30, 41) est susceptible de coulisser dans son propre plan pour permettre un déplacement horizontal relatif des deux plaques formant électrode (30, 41), de manière qu'une lecture de poids initiale puisse être établie en faisant varier la surface de chevauchement des deux plaques formant électrode.

2. Un dispositif de détection de poids selon la revendication 1, dans lequel la plaque inférieure (41) desdites plaques formant électrode est imprimée sur une carte de circuit imprimée (40), et dans lequel la carte de circuit imprimée (40) est montée pour être susceptible d'être coulissée dans son propre plan , de manière que la surface en chevauchement des deux plaques formant électrode soit de taille variable.

3. Un dispositif de détection de poids selon la revendication 1 ou la revendication 2, dans lequel ladite surface (32) supportée élastiquement de ladite plaque supérieure d'électrode (30) a dans ladite plaque formant électrode supérieure une aire qui est séparée de ladite plaque formant électrode sur trois côtés.

4. Un dispositif de détection de poids selon l'une quelconque des revendications précédentes, comprenant en outre un support (20) pour supporter lesdites deux plaques formant électrode (30, 41), ledit support (20) ayant des premiers moyens de surface (24a, 24b) pour supporter ladite plaque formant électrode supérieure (30) et des deuxièmes moyens de surface (21) pour supporter ladite plaque formant électrode inférieure (41), dans lequel lesdits premiers moyens de surface (24a, 24b) sont espacés au-dessus desdits deuxièmes moyens de surface (21).

5. Un dispositif de détection de poids selon la revendication 4, dans lequel ledit support (20) est muni de deux parois latérales (22a, 22b) et d'un fond (21), la face avant et la face arrière du support étant ouvertes, et le fond (21) formant lesdits deuxièmes moyens de surface supportant la plaque formant électrode inférieure (41).

6. Un dispositif de détection de poids selon la revendication 4 ou la revendication 5, comprenant en outre un ensemble moteur (10) monté sur ledit support (20), l'ensemble moteur (10) ayant un axe de moteur (11) pour supporter un plateau réceptacle d'aliments, et dans lequel la plaque d'électrode supérieure (30) est fixée sur ledit support (20) au-dessous dudit ensemble de moteur pour être en contact avec ledit axe de moteur (11).

**7.** Un dispositif de détection de poids selon la revendication 6, dans lequel ledit support (20) est muni de premiers éléments en extension (23a, 23b) s'étendant depuis lesdites parties supérieure et arrière des deux parois latérales (22a, 22b) dudit support, et ledit ensemble de moteur (10) est monté sur lesdits premiers éléments en extension (23a, 23b).

**8.** Un dispositif de détection de poids selon l'une quelconque des revendications 4 à 7, dans lequel ledit support (20) est muni de deuxièmes pièces en extension (24a, 24b) s'étendant depuis des parties avant et inférieure de ses parois latérales (22a, 22b), lesdits deuxièmes éléments en extension (24a, 24b) étant verticalement plus hauts que le fond (21) dudit support, et lesdits deuxièmes éléments en extension formant lesdits premiers moyens de surface supportant ladite plaque d'électrode supérieure (30).

**9.** Un dispositif de détection de poids selon l'une quelconque des revendications 4 à 8, dans lequel ledit support (20) est muni de guides (25a, 25b), coudés à la partie arrière de leur fond (21) pour guider la plaque d'électrode inférieure (41).

**10.** Un dispositif de détection de poids selon l'une quelconque des revendications 4 à 9, dans lequel ledit support (20) est muni d'épaulements (26a, 26b), s'étendant depuis lesdites parties supérieures de ses parois latérales (22a, 22b), et un boîtier (7), d'un corps à micro-onde, est combiné avec lesdits épaulements.

# FIG.1
# (PRIOR ART)

# FIG.2

# FIG.3

# FIG.4

EP 0 694 768 B1